# EUROPEAN PATENT APPLICATION

(11) **EP 4 535 723 A1**
(43) Date of publication of application: **09.04.2025**
(21) Application number: 23810851.8
(22) Date of filing: 11.05.2023
(51) Int. Cl.: H04L 9/40, H04L 67/10

(54) **IDENTITY AUTHENTICATION METHOD AND APPARATUS, AND ELECTRONIC DEVICE AND COMPUTER-READABLE STORAGE MEDIUM**

(30) Priority: 26.05.2022 CN 202210589930
(71) Applicant: Shenzhen TCL New Technology Co., Ltd., Shenzhen, Guangdong 518052 (CN)
(72) Inventor: XU, Wenpeng, Shenzhen, Guangdong 518052 (CN)
(74) Representative: Murgitroyd & Company
(86) International application number: PCT/CN2023/093555
(87) International publication number: WO 2023/226778

(57) **Abstract**

Provided in the present disclosure are an identity authentication method and apparatus, and an electronic device and a computer-readable storage medium. Provided in the present disclosure arc an identity authentication method and apparatus, and an electronic device and a computer-readable storage medium. In the method, when data interaction is performed among a plurality or clouds, it is not necessary to respectively configure service keys for the clouds, and bidirectional identity authentication is performed between the clouds, thereby avoiding the risks of service key leakage and middleman hijack.

## Description

This application claims priority to Chinese Application No. 202210589930.X, entitled "IDENTITY AUTHENTICATION METHOD AND APPARATUS, AND ELECTRONIC DEVICE AND COMPUTER-READABLE STORAGE MEDIUM", filed on May 26, 2022. The entire disclosure of the above application is incorporated herein by reference.

### FIELD OF INVENTION

The present disclosure relates to the field of information security technology, in particular to an authentication method, an apparatus, an electronic device and a computer-readable storage medium.

### BACKGROUND

With a rapid development of cloud services, there are more and more scenarios for data interaction between clouds. In order to ensure the security of data interaction, identity authentication is usually required before data interaction.

At present, the identity authentication between clouds is mainly to configure the service key on each cloud. Sending the service key configured by the initiating cloud to the target cloud for authentication when the initiating cloud needs to transmit data to an interactive cloud. However, there is a risk to leak the service key because it is configured on the cloud. For example, developers can easily obtain the service key configured for each cloud, so as to realize the legitimate data transmission that compromises the cloud service. In addition, when the initiating cloud transmits data to the interactive cloud, only the identity authentication of the initiating cloud to the initiating cloud is carried out, and the identity authentication of the initiating cloud to the interactive cloud is not carried out, that is, there is no two-way identity authentication between the clouds, and there is a risk of hijacking by a middleman.

### SUMMARY

The present disclosure provides an identity authentication method, an apparatus, an electronic device and a computer-readable storage medium for alleviating the technical problems that the service key is easy to be leaked and there is a risk of man-in-the-middle hijacking in the current identity authentication method.

In order to solve the above-mentioned technical problems, the present disclosure provides the following technical schemes:

The present disclosure provides an authentication method which includes:
generating a first authentication information based on a first identification information, and generating an Nth authentication information based on an Nth identification information, when a plurality of clouds carry out data interaction, wherein the first identification information comprises registration information or random information of an initiator, and the Nth identification information comprises registration information or random information of an interactive end;
sending the first authentication information to the initiator, and sending the Nth authentication information to the interactive end;
receiving the first identification information and the first authentication information sent by the interactive end, and receiving the Nth identification information and the Nth authentication information sent by the initiator, wherein the first identification information and the first authentication information are sent by the initiator to the interactive end, and the Nth identification information and the Nth authentication information are sent from the interactive end to the initiator; and
decrypting the Nth authentication information received from the initiator to obtain the decrypted Nth authentication information, and decrypting the first authentication information received from the interactive end to obtain the decrypted first authentication information, so that the initiator and the interactive end determine whether the identity authentication between the initiator and the interactive end passes according to the decrypted Nth authentication information and the decrypted first authentication information, respectively.

Furthermore, the present disclosure also provides an identity authentication method comprising:
sending a first identification information to a management end and an interactive end when a plurality of clouds carry out data interaction;
receiving a first authentication information sent by the management end, wherein the first authentication information is generated by the management end according to the first identification information;
receiving an Nth identification information and an Nth authentication information sent by the interactive end, wherein the management end generates and sends the Nth authentication information to the interactive end according to the Nth identification information received by the interactive end;
sending the Nth identification information and the Nth authentication information to the management end, so that the management end decrypts the Nth authentication information to obtain a decrypted Nth authentication information;
determining whether the decrypted Nth authentication information and the Nth identification information received from the interactive end satisfy preset conditions, so as to confirm an identity authentication of the interactive end; and
sending the first authentication information to the interactive end to control the interactive end to authenticate an identity of the initiator according to the first identification information and the first authentication information.

Furthermore, the present disclosure also provides an identity authentication method comprising
sending an Nth identification information to a management end and an initiator when a plurality of clouds interact data;
receiving an Nth authentication information sent by the management end, wherein the Nth authentication information is generated by the management end according to the Nth identification information;
receiving a first identification information and a first authentication information sent by the initiator, wherein the management end generates and sends the first authentication information to the initiator according to the first identification information sent by the initiator;
sending the first identification information and the first authentication information to the management end, so that the management end decrypts the first authentication information to obtain the decrypted first authentication information;
determining whether the decrypted first authentication information and the first identification information received from the initiator meet preset conditions, so as to confirm an identity authentication of the initiator; and
sending the Nth authentication information to the initiator, so that the initiator confirms an identity authentication of the interactive end according to the Nth identification information and the Nth authentication information.

Furthermore, the present disclosure also provides an identity authentication method comprising:
an initiator sending a first identification information to the management end, and an interactive end sending an Nth identification information to the management end, when a plurality of clouds carry out data interaction, wherein the first identification information comprises a registration information or random information of the initiator, and the Nth identification information comprises a registration information or random information of the interactive end;
the management end generating and sending a first authentication information to the initiator according to the first identification information, and generating and sending an Nth authentication information to the interactive end according to the received Nth identification information;
the initiator sending the first identification information and the first authentication information received from the management end to the interactive end, and the interactive end sending the Nth identification information and the Nth authentication information received from the management end to the initiator;
the interactive end sending the first identification information and the first authentication information received from the initiator to the management end, and the initiator sending the Nth identification information and the Nth authentication information received from the interactive end to the management end;
the management end decrypting the first authentication information received from the interactive end and the Nth authentication information received from the initiator to obtain the decrypted first authentication information and the decrypted Nth authentication information, and sending the decrypted first authentication information to the interactive end, and sending the decrypted Nth authentication information to the initiator;
the interactive end determining whether the decrypted first authentication information and the first identification information received from the initiator meet preset conditions, so as to determine whether the identity authentication of the initiator is confirmed; the initiator determining whether the decrypted Nth authentication information and the Nth identification information received from the interactive end meet the preset conditions, so as to determine whether the identity authentication of the interactive end is confirmed.

Furthermore, the present disclosure also provides an identity authentication device comprising:
an information generation module, for generating a first authentication information based on a first identification information, and generating an Nth authentication information based on an Nth identification information, when a plurality of clouds carry out data interaction, wherein the first identification information comprises registration information or random information of an initiator, and the Nth identification information comprises registration information or random information of an interactive end;
a first sending module, for sending the first authentication information to the initiator, and sending the Nth authentication information to the interactive end;
a first receiving module, for receiving the first identification information and the first authentication information sent by the interactive end, and receiving the Nth identification information and the Nth authentication information sent by the initiator, wherein the first identification information and the first authentication information are sent by the initiator to the interactive end, and the Nth identification information and the Nth authentication information are sent from the interactive end to the initiator; and
a decryption authentication module, for decrypting the Nth authentication information received from the initiator to obtain the decrypted Nth authentication information, and decrypting the first authentication information received from the interactive end to obtain the decrypted first authentication information, so that the initiator and the interactive end determine whether the identity authentication between the initiator and the interactive end passes according to the decrypted Nth authentication information and the decrypted first authentication information, respectively.

Furthermore, the present disclosure also provides an identity authentication device which includes:
a second sending module, for sending a first identification information to a management end and an interactive end when a plurality of clouds carry out data interaction;
a second receiving module, for receiving a first authentication information sent by the management end, wherein the first authentication information is generated by the management end according to the first identification information;
a third receiving module, for receiving an Nth identification information and an Nth authentication information sent by the interactive end, wherein the management end generates and sends the Nth authentication information to the interactive end according to the Nth identification information received by the interactive end;
a third sending module, for sending the Nth identification information and the Nth authentication information to the management end, so that the management end decrypts the Nth authentication information to obtain a decrypted Nth authentication information;
a first determining module, for determining whether the decrypted Nth authentication information and the Nth identification information received from the interactive end satisfy preset conditions, so as to confirm an identity authentication of the interactive end; and
a fourth sending module, for sending the first authentication information to the interactive end to control the interactive end to authenticate an identity of the initiator according to the first identification information and the first authentication information.

Furthermore, the present disclosure also provides an identity authentication device which includes:
a fifth sending module, for sending an Nth identification information to a management end and an initiator when a plurality of clouds interact data;
a fourth receiving module, for receiving an Nth authentication information sent by the management end, wherein the Nth authentication information is generated by the management end according to the Nth identification information;
a fifth receiving module, for receiving a first identification information and a first authentication information sent by the initiator, wherein the management end generates and sends the first authentication information to the initiator according to the first identification information sent by the initiator;
a sixth sending module, for sending the first identification information and the first authentication information to the management end, so that the management end decrypts the first authentication information to obtain the decrypted first authentication information;
a second determining module, for determining whether the decrypted first authentication information and the first identification information received from the initiator meet preset conditions, so as to confirm an identity authentication of the initiator; and
a seventh sending module, for sending the Nth authentication information to the initiator, so that the initiator confirms an identity authentication of the interactive end according to the Nth identification information and the Nth authentication information.

Furthermore, the present disclosure also provides an electronic device which includes a processor and a memory storing computer-readable instructions executable by the processor to perform the identity authentication method as stated above.

Furthermore, the present disclosure also provides a computer-readable storage medium, storing a plurality of instructions executable by a processor to perform the identity authentication method as stated above.

Advantageous effect: The present disclosure provides an identity authentication method, an apparatus, an electronic device and a computer-readable storage medium. Specifically, the identity authentication method includes: generating a first authentication information based on a first identification information, and generating an Nth authentication information based on an Nth identification information, when a plurality of clouds carry out data interaction, wherein the first identification information comprises registration information or random information of an initiator, and the Nth identification information comprises registration information or random information of an interactive end; sending the first authentication information to the initiator, and sending the Nth authentication information to the interactive end; receiving the first identification information and the first authentication information sent by the interactive end, and receiving the Nth identification information and the Nth authentication information sent by the initiator, wherein the first identification information and the first authentication information are sent by the initiator to the interactive end, and the Nth identification information and the Nth authentication information are sent from the interactive end to the initiator; and decrypting the Nth authentication information received from the initiator to obtain the decrypted Nth authentication information, and decrypting the first authentication information received from the interactive end to obtain the decrypted first authentication information, so that the initiator and the interactive end determine whether the identity authentication between the initiator and the interactive end is confirmed according to the decrypted Nth authentication information and the decrypted first authentication information, respectively. The method realizes the two-way identity authentication between the initiator and the interactive end by decrypting the Nth authentication information received from the initiator and the first authentication information received from the interactive end by determining whether the identity authentication between the initiator and the interactive end is confirmed according to the decrypted authentication information. The two-way authentication process does not need to configure the service keys on the initiator and the interactive end, but decrypts the service keys of the initiator and the interactive end that are scattered by the root keys stored by the management end, avoiding leakage of service key and man-in-the-middle hijacking.

### BRIEF DESCRIPTION OF DRAWINGS

The following is combined with the accompanying drawings, through a detailed description of the specific embodiment of the present disclosure, the technical solution and other beneficial effects of the present disclosure will be obvious.
FIG. 1 illustrates a schematic diagram of an identity authentication system according to an embodiment of the present disclosure.
FIG. 2 illustrates a flowchart of an identity authentication method according to an embodiment of the present disclosure.
FIG. 3 illustrates a conventional identity authentication system.
FIG. 4 illustrates a flowchart of an identity authentication method operated by the management end according to an embodiment of the present disclosure.
FIG. 5 illustrates a schematic diagram of a registration system provided in the embodiment of the present disclosure.
FIG. 6 illustrates a flowchart of an identity authentication method operated by the initiator according to an embodiment of the present disclosure.
FIG. 7 illustrates a schematic diagram of the flow of the identity authentication method at the interactive end according to an embodiment of the present disclosure.
FIG. 8 illustrates a block diagram of a management end according to an embodiment of the present disclosure.
FIG. 9 illustrates a block diagram of an initiator according to an embodiment of the present disclosure.
FIG. 10 illustrates a block diagram of an interactive end according to an embodiment of the present disclosure.
FIG. 11 illustrates a block diagram of an electronic device according to an embodiment of the present disclosure.

### DETAILED DESCRIPTION

The technical solution in the embodiment of the present disclosure will be clearly and completely described below in conjunction with the accompanying drawings in the embodiment of the present disclosure. Obviously, the described embodiments are only some embodiments of the present disclosure, not all embodiments. Based on the embodiments in the present disclosure, all other embodiments obtained by a person skilled in the art without creative work fall within the scope of protection of the present disclosure.
the terms "including" and "having" in the description and claims of this application and any variation thereof, are intended to cover non-exclusive inclusions. The division of modules appearing in the present disclosure is only a logical division, and there may be other divisions when it is implemented in practical applications, such as multiple modules can be combined or integrated into another system, or some features can be ignored or not executed.

In the present disclosure, both the initiator and the interactive end are clouds for data exchange. Specifically, in the process of data interaction, the end that actively initiates the data interaction request can be called the initiator, and the end that passively receives the data interaction request can be called the interactive end.

In the present disclosure, the identification information includes registration information or random information. Specifically, the identification information may be a separate registration information or a separate random information, or combination of the registration information and the random information.

In the present disclosure, the registration information includes the registration number and the registration type. Specifically, the operation and maintenance personnel apply for registration on the registration system to be released, and after the administrator approve it, the registration management system can generate the corresponding registration type and registration number for the cloud that needs to be released, and synchronize the registration type and registration number to the management end for use.

In the present disclosure, random information which includes random numbers and time stamps is randomly generated from the cloud.

In the present disclosure, the authentication information is obtained by encrypting the random information generated by the cloud according to a service key which is sent from a root key stored in the management end.

The present disclosure provides an authentication method, an apparatus, an electronic device and a computer-readable storage medium.

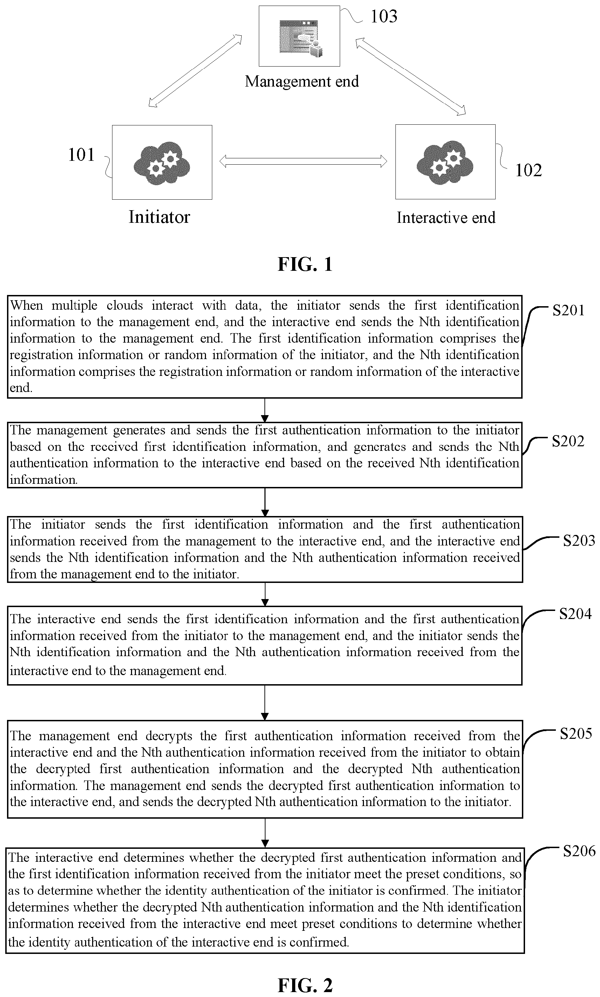

Referring to FIG. 1 illustrating a schematic diagram of an identity authentication system according to an embodiment of the present disclosure, the identity authentication system includes an initiator 101, an interactive end 102 and a management end 103.

A communication link is arranged between the initiator 101, the interactive end 102 and the management end 103 to exchange information. The types of communication links include but are not limit to wired communication links, wireless communication links or optical fiber cables.

When data is exchanged on multiple clouds, the initiator 101 may initiate a data interaction request to multiple interactive ends 102, or multiple initiators 101 may initiate a data interaction request to an interactive end 102, or multiple initiators 101 may initiate a data interaction request to multiple interactive ends 102.

The management end 103 is a system that provides keys and other related services such as backup, archiving, recovering, updating these keys.

The present disclosure provides an identity authentication system which comprises an initiator 101, an interactive end 102 and a management end 103. Specifically, as illustrated in FIG. 2 illustrating a flowchart of an identity authentication method according to an embodiment of the present disclosure, the identity authentication system performs identity authentication method which comprises at least the steps S201-S206.

S201: When multiple clouds interact with data, the initiator sends the first identification information to the management end, and the interactive end sends the Nth identification information to the management end. The first identification information comprises the registration information or random information of the initiator, and the Nth identification information comprises the registration information or random information of the interactive end.

When data is exchanged between multiple clouds, the initiator A generates random information (including random number R(A) and time stamp D(A)) of the initiator A, initiates an identity authentication process to the interactive end B, and uploads the first identification information of the initiator A (including registration information (registration type A and registration number A) and random information (random number R(A) and time stamp D(A)) of initiator A to the management end. Similarly, the interactive end B generates random information (including random number R(B) and time stamp D(B)) of the interactive end B, initiates an identity authentication process to the initiator A, and uploads the Nth identification information of the interactive end B (including registration information (registration type B and registration number B) and random information (random number R(B)) of interactive end B and time stamp D(B)) to the management end. It should be noted that N is a positive integer greater than 1.

S202: The management generates and sends the first authentication information to the initiator based on the received first identification information, and generates and sends the Nth authentication information to the interactive end based on the received Nth identification information.

The management end can uniquely determine the corresponding service keys of each cloud according to the registration type and registration number of the cloud, and disperse the service keys of the corresponding cloud from the root key stored by the management end. Specifically, the management end disperses the key A of the initiator A from the stored root key according to the registration information (registration type A and registration number A) received from the initiator A, and performs encryption operations on the random information (random number R(A) and time stamp D(A)) received from the initiator A according to the key A, generates the first authentication information Auth(A) of the initiator A, and converts the first authentication information Auth(A).Send the message to initiator A. Similarly, the management end disperses the key B of the interactive end B from the stored root key according to the registration information (registration type B and registration number B) received from the interactive end B, and performs encryption operations on the random information (random number R(B) and time stamp D(B)) received from the interactive end B according to the key B, and generates the Nth authentication information Auth (B) of the interactive end Band sends the Nth authentication information Auth (B) to the interactive end B.

S203: The initiator sends the first identification information and the first authentication information received from the management to the interactive end, and the interactive end sends the Nth identification information and the Nth authentication information received from the management end to the initiator.

After receiving the first authentication information Auth (A) sent by the administrator, the initiator A sends the first identification information (including registration type A, registration number A, and random number R(A)) and the first authentication information Auth(A) received from the administrator to the interactive end B. Similarly, after receiving the Nth authentication information Auth (B) sent by the management end, the interactive end B sends the Nth identification information (including registration type B, registration number B, and random number R(B)) and the Nth authentication information Auth (B) received from the management end to the initiator A.

It should be noted that N is a positive integer greater than 1. A plurality of initiators interact with an interactive end. For example, the initiator A initiates an identity authentication process 1 to the interactive end B, the initiator X initiates an identity authentication process 2 to the interactive end B, and the initiator Y initiates an identity authentication process 3 to the interactive end B. Because the process of initiating identity authentication to the interactive end is the same, but the identification information of different initiators is different, and for each initiator, it can be regarded as the initiator sending the first identification information and its corresponding first authentication information to the interactive end. For example, the initiator A initiates an identity authentication process 1 to the interactive end B, the initiator A initiates the identity authentication process 2 to the interactive end C, and the initiator A initiates the identity authentication process 3 to the interactive end D. Because there is only one initiator, the initiator can be regarded as the initiator sending the first identification information and the corresponding first authentication information to each interactive end, so that each interactive end performs identity authentication on the initiator respectively, avoiding the waste of resources.

S204: The interactive end sends the first identification information and the first authentication information received from the initiator to the management end, and the initiator sends the Nth identification information and the Nth authentication information received from the interactive end to the management end.

The first identification information (including the registration information, i.e., the registration type A and the registration number A of the initiator A) and the first authentication information Auth(A) received from the initiator A are sent to the management end, so that the management end decrypts the first authentication information according to the first identification information. Similarly, initiator A sends the Nth identification information (including registration information, i.e., the registration type B and registration number B of the interactive end B) and the Nth authentication information Auth (B) received from the interactive end B to the management end, so that the management end can decrypt the Nth authentication information according to the Nth identification information.

S205: The management end decrypts the first authentication information received from the interactive end and the Nth authentication information received from the initiator to obtain the decrypted first authentication information and the decrypted Nth authentication information. The management end sends the decrypted first authentication information to the interactive end, and sends the decrypted Nth authentication information to the initiator.

The management end disperses the key A of the initiator A from the stored root key according to the first identification information (including the registration information, i.e., the registration type A and the registration number A of the initiator A) received from the interactive end B, and decrypts the first authentication information Auth(A) received from the interactive end B according to the key A, and obtains the decrypted first authentication information (including the decryption random number R'(A)and decryption time stamp D'(A)). The management end sends the decrypted first authentication information (including the decryption random number R'(A) and the decryption time stamp D'(A)) to the interactive end B, so that the interactive end B authenticates the identity of initiator A based on the information. Similarly, the management end receives the Nth identification information (including the registration information, i.e., the registration type B and the registration number B of the interactive end B) the initiator A, and the key B of the interactive end B which is dispersed from the stored root key. The management end decrypts the Nth authentication information Auth(B) received from the initiator A according to the key B, and obtains the decrypted Nth authentication information (including the decryption random number R'(B) and the decryption time stamp D'(B)), and then sends the decrypted Nth authentication information (including the decryption random number R'(B) and the decryption time stamp D'(B)) to the initiator A, so that the initiator A authenticates the identity of the interactive end B based on this information. In this way, two-way identity authentication between clouds is realized.

S206: The interactive end determines whether the decrypted first authentication information and the first identification information received from the initiator meet the preset conditions, so as to determine whether the identity authentication of the initiator is confirmed. The initiator determines whether the decrypted Nth authentication information and the Nth identification information received from the interactive end meet preset conditions to determine whether the identity authentication of the interactive end is confirmed.

The preset condition include that the decryption random number is equal to the random number, and the difference between the decryption time stamp and the time stamp is within the configured time. Specifically, after receiving the decrypted first authentication information (including the decryption random number R'(A) and the decryption time stamp D'(A)), the interactive end B compares the decryption random number R'(A) with the random number R(A) in the first identification information received from the initiator A, and compares the difference between the decryption time stamp D'(A) and the time stamp D(A) in the first identification information received from the initiator A with the configuration time. When the decryption random number R'(A) is equal to the random number R(A), and the difference between the decryption time stamp D'(A) and the time stamp D(A) in the first identification information received from the initiator A is within the configuration time, then the interactive end B determines that the identity authentication of the initiator A is confirmed. Similarly, after receiving the decrypted Nth authentication information (including the decryption random number R'(B) and the decryption time stamp D'(B)), the initiator A compares the decrypted random number R'(B) with the random number R(B) in the Nth identification information received from the interactive end B, and compares a difference between the decryption time stamp D'(B) and the time stamp D(B) in the Nth identification information received from the interactive end B with the configuration time. If the decrypted random number R'(B) is equal to the random number R(B), and the difference between the decryption time stamp D'(B) and the time stamp D(B) is within the configuration time, the initiator A determines that the identity authentication of the interactive end B is confirmed.

It should be noted that if one party in the cloud determines that it has not passed the identity authentication of the other party, the link with the other party will be disconnected and no data interaction with the other party will be disconnected.

In one embodiment, if both the initiator and the interactive end confirm the identity authentication, the initiator generates a session key for the initiator and the interactive end generates a session key for the interactive end. Specifically, after both the initiator A and the interactive end B confirm the identity authentication (i.e., the initiator A determines that the identity authentication of the initiator B is confirmed, and the interactive end B also determines that the identity authentication of the initiator A is confirmed), the initiator A combines the parameters (random numbers R(A), R(B) and time stamps D(A), D(B)) in the identity authentication process according to a specific algorithm (such as hash operation)) to generate the initiator session key S(AB). Based on a specific algorithm (e.g., hashing operation), the interactive end B generates the interactive end session key S'(AB) based on a specific algorithm (e.g., hashing operation) and the parameters (random numbers R(A), R(B) and time stamps D(A), D(B)) in the authentication process.

Then, the initiator encrypts the session message through the initiator's session key to send the initiator's session authentication message to the interactive. Specifically, the initiator A hashes the session message (the overall message sent between the initiator and the interactive end, including the registration information, random information, and authentication information in the cloud, etc.) and uses the initiator's session key S(AB) to perform encryption calculation to obtain and to send the initiator session authentication message M(AB) to the interactive end B. The interactive end B verifies the initiator session authentication message M(AB).

Then, the interactive end receives the initiator session authentication message sent by the initiator, and encrypts the session message through the interactive end session key to obtain the interactive session authentication message. Specifically, after receiving the initiator session authentication message M (AB) sent by initiator A, the interactive end B hashes the session message (the overall message sent between the initiator and the interactive end, including the registration information, random information, and authentication information in the cloud, etc.) and uses the interactive end session key S'(AB) to perform encryption calculation. The interactive end session authentication message M'(AB) is obtained.

Finally, the interactive end determines whether the interactive end session authentication message is the same as the initiator session authentication message received from the initiator. Specifically, the interactive end B verifies whether the initiator session authentication message M (AB) is the same as the interactive end session authentication message M'(AB). If the initiator session authentication message M (AB) is the same as the interactive session authentication message M'(AB), the interactive end B communicates with the initiator A in session, and all communication data is encrypted by the initiator session key S(AB)/the interactive end session key S'(AB), avoiding leaking or breaching data.

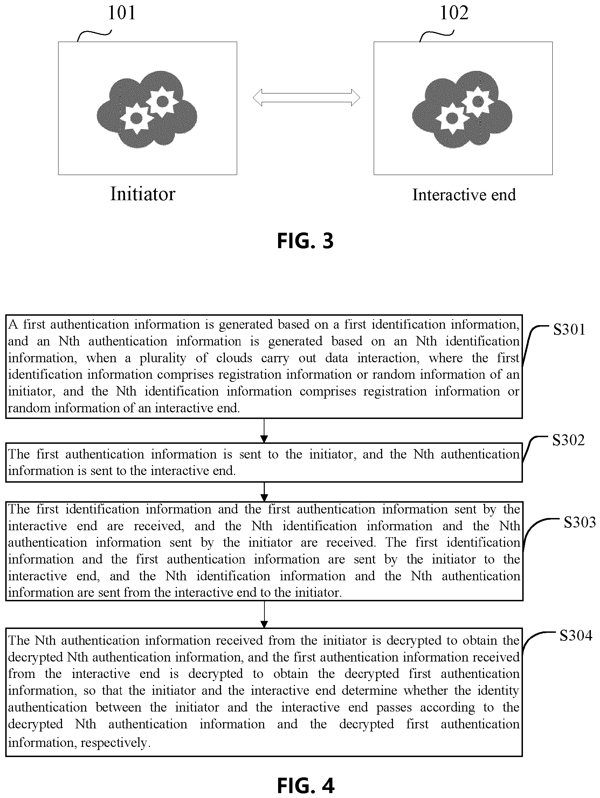

Refer to FIG. 3 illustrating a conventional identity authentication system. Taking an initiator and an interactive end for data exchange as an example, before the initiator 101 and the interactive end 102 carry out data exchange, the service ID (A-ID of the initiator and the B-ID of the interactive end) and the service key (the first service key A-key and the second service key B-Key) are on each cloud. When the initiator 101 needs to transmit data, the A-ID and A-key are sent to the interactive end 102 for authentication. If the interactive end 102 confirms the A-ID and A-Key, then the interactive end 102 return a token to the initiator 101. The initiator 101 carries the token to the interactive end 102 for data transmission. Similarly, the interactive end 102 and the initiator 101 carry out the same data transmission method.

In contrast to prior art, the identity authentication system according to the present disclosure solve a risk of key leakage. For example, because the developer may obtain the service keys of all interactive ends, and may easily endanger the legitimate data transmission of the services of the interactive end. The interactive end in the prior art does not carry out two-way identity authentication, and there is man-in-the-middle hijacking (also known as MITM hijacking, which is an "indirect" attack. This indirect attack mode is to virtually place a computer controlled by an attacker between two communication computers in a network connection by various technical means, so as to obtain the data of both parties by deceiving the two parties). In addition, the data transmission in the prior art is to carry out data transmission by using a token after passing the authentication, causing a risk of data leakage. Because the key of the present disclosure is always managed in the management end 103, the risk of key leakage is avoided. Furthermore, the initiator 101 and the interactive end 102 in the present disclosure carry out two-way identity authentication, avoiding the man-in-the-middle hijacking, so as to ensure the legitimacy of the call between the interactive ends, in addition, the data transmission carried out after passing the identity authentication is encrypted through the session key, and the risk of data leakage is avoided.

It should be noted that the system architecture shown in FIG. 1 is only an example. The terminal, apparatus and scene described in the embodiment of the present disclosure are for the purpose of more clearly illustrating the technical solution of the embodiment of the present disclosure, and do not constitute the limitation of the technical solution provided by the embodiment of the present disclosure. Each of them is explained in detail below. It should be noted that the following embodiments are described in order not as a limitation on the preferred order of embodiments.

Based on the system architecture of the above-mentioned identity authentication system, the following will introduce the identity authentication method in the present disclosure in detail.

Referring to FIG. 4 illustrating a flowchart of an identity authentication method operated by the management end according to an embodiment of the present disclosure, the method comprises the following steps S301-S304.

In step S301, a first authentication information is generated based on a first identification information, and an Nth authentication information is generated based on an Nth identification information, when a plurality of clouds carry out data interaction, where the first identification information comprises registration information or random information of an initiator, and the Nth identification information comprises registration information or random information of an interactive end.

In one embodiment, before the step of generating a first authentication information based on a first identification information, and the generating an Nth authentication information based on an Nth identification information, the identification information of the registered cloud needs to be recorded. the Tdentity authentication method further comprises: receiving and recording a registered cloud identification information sent by a registration system.

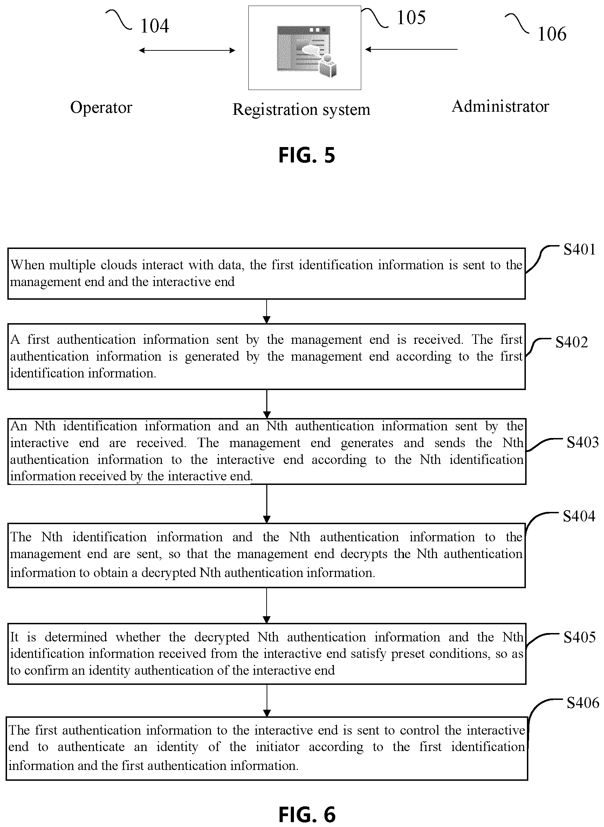

Specifically, before performing identity authentication, it is necessary to receive and record the identification information of the registered cloud sent by the registration system. Referring to FIG. 5 illustrating a flowchart of an identity authentication method operated by the initiator according to an embodiment of the present disclosure, the operator 104 carry out a registration application on the registration system 105 to the cloud that needs to be registered. The administrator 106 are examined on the registration application, and after the approval is passed, a response pass instruction is returned to the registration system 105, and the registration system 105 can generate the corresponding identification information (including the registration type and the registration number) for the cloud that needs to be registered after receiving the approval pass instruction, At the same time, the identification information (including the registration type and the registration number) is synchronized to the management end 103 for use, and the management end 103 receives the identification information of the registered cloud sent by the registration system 105 and records it.

It should be noted that the received first identification information is sent from the initiator to the management end, and the received Nth identification information is sent from the interactive end to the management end, where N is a positive integer greater than 1.

In an embodiment, the first identification information comprises registration information and random information of the initiator. The step of generating a first authentication information based on a first identification information comprise: obtaining a root key; calculating a key of the initiator according to the registration information of the initiator and the root key; calculating the first authentication information according to the key of the initiator and the random information. The management end 103 is used to provide and manage the service key of each cloud. In the modern cryptosystem, the multi-level key mechanism is mostly adopted. Under this mechanism, the subordinate key is protected by the superior key. The root key is the source of the multi-level key system, and any subordinate key must be directly or indirectly protected by the root key. Therefore, the root key security is the basis and guarantee of the security of the key system. The registration information includes the registration number or registration type of the cloud (for example, the registration information of initiator A includes registration number A and registration type A), and the random information includes the random number and time stamp generated when the cloud interacts with data (for example, the random information of initiator A includes the random number R(A) and the time stamp D(A)). As a random factor, the time stamp can be used to generate a temporary session key and prevent replay attacks (which refer to the fact that an attacker sends a packet that has been received by the destination host to achieve the purpose of deceiving the system, which is mainly used in the identity authentication process to destroy the correctness of authentication).

Specifically, the management end 103 can uniquely determine the corresponding service keys of each cloud according to the registration information (registration type and registration number) of the cloud, and disperse the service keys of the corresponding cloud from the root key stored by the management end 103. Specifically, the management end disperses the key A of the initiator A from the stored root key according to the registration information (registration type A and registration number A) received from the initiator A, and performs encryption operations on the random information (random number R(A) and time stamp D(A)) received from the initiator A according to the key A, and generates the first authentication information Auth(A) of the initiator A. Similarly, the process of the management end 103 generating the Nth authentication information Auth(B) based on the Nth identification information received from the interactive end is also the same, which will not be repeated here, and can be found in S202.

In step S302, the first authentication information is sent to the initiator, and the Nth authentication information is sent to the interactive end.

The management end 103 delivers the generated first authentication information Auth(A) to the initiator A, and delivers the generated Nth authentication information Auth(B) to the interactive end B.

In step S303, the first identification information and the first authentication information sent by the interactive end are received, and the Nth identification information and the Nth authentication information sent by the initiator are received. The first identification information and the first authentication information are sent by the initiator to the interactive end, and the Nth identification information and the Nth authentication information are sent from the interactive end to the initiator.

After the administrator delivers the generated authentication information to the corresponding cloud, the initiator A sends the first identification information (including registration type A, registration number A, and random number R(A)) and the first authentication information Auth(A) received from the administrator to the interactive end B. The interactive end B sends the first authentication information Auth(A) from the initiator A and the registration information in the first identification information (i.e., the registration type A and the registration number A of the initiator A) to the management end. Similarly, the interactive end B also sends the Nth identification information (including registration type B, registrant number B, and the random number R(B)) and the Nth authentication information Auth(B) received from the management end to the initiator A, and then the initiator A receives the Nth authentication information Auth(B) from the interactive end B and the registration information in the Nth identification information (i.e., registration type B and registration number B of the interactive end B) to the management end.

In step S304, the Nth authentication information received from the initiator is decrypted to obtain the decrypted Nth authentication information, and the first authentication information received from the interactive end is decrypted to obtain the decrypted first authentication information, so that the initiator and the interactive end determine whether the identity authentication between the initiator and the interactive end passes according to the decrypted Nth authentication information and the decrypted first authentication information, respectively.

In one embodiment, the Nth identification information comprises the registration information (i.e., the registration number and the rank type) of the interactive end. The step of decrypting the Nth authentication information received from the initiator to obtain the decrypted Nth authentication information comprise: obtaining a root key; calculating a key of the interactive end according to the registration information of the interactive end and the root key; and decrypting the Nth authentication information received from the initiator through the key of the interactive end to obtain the decrypted Nth authentication information. The decrypted Nth authentication information includes a decryption random number and a decryption time stamp.

Specifically, the management end 103 disperses the key B of the interactive end B from the stored root key according to the Nth identification information (including the registration information, i.e., the registration type B and the registration number B of the interactive end B) received from the initiator A according to the key B, and decrypts the Nth authentication information Auth (B) received from the initiator A according to the key B, and obtains the decrypted Nth authentication information (including the decryption random number R'(B) and the decryption time stamp D'(B). Similarly, the process of decrypting the first authentication information received from the interactive end by the management end 103 after Auth(A) is decrypted, which will not be repeated here, and can be found in S205.

After obtaining the decrypted Nth authentication information and the decrypted first authentication information, the management end 103 sends the decrypted Nth authentication information to the initiator to instruct the initiator to determine whether the identity authentication of the interactive end is confirmed according to the decrypted Nth authentication information. Similarly, the decrypted first authentication information is sent to the interactive end to control the interactive end to determine whether the identity authentication of the initiator is confirmed based on the decrypted first authentication information. The step for the initiator and the interactive end to determine whether the other party's identity authentication is confirmed is described below and will not be repeated here.

Referring to FIG. 6 illustrating a illustrates a flowchart of an identity authentication method operated by the initiator according to an embodiment of the present disclosure. The identity authentication method includes S401-S405.

In S401, when multiple clouds interact with data, the first identification information is sent to the management end and the interactive end.

The initiator A generates random information (including the random number R(A) and the time stamp D(A)) of the initiator A, initiates an identity authentication process to the interactive end B, and sends the first identification information (including the registration information (registration type A and registration number A) and random information (the random number R(A) and the time stamp D(A)) of the initiator to the management and the interactive end.

In step S402, a first authentication information sent by the management end is received. The first authentication information is generated by the management end according to the first identification information.

According to the preceding steps, the management end generates the first authentication information Auth(A) based on the first identification information sent by initiator A and delivers it to the initiator A. The initiator A receives the first authentication information Auth(A) sent by the administrator. For details about the process of generating the first authentication information, please refer to S202 and S301, and will not be repeated here.

In step S403, an Nth identification information and an Nth authentication information sent by the interactive end are received. The management end generates and sends the Nth authentication information to the interactive end according to the Nth identification information received by the interactive end.

The initiator A receives the Nth identification information (including registration type B, registration number B, and random number R(B)) and the Nth authentication information Auth (B) sent by the interactive end.

In step S404, the Nth identification information and the Nth authentication information to the management end are sent, so that the management end decrypts the Nth authentication information to obtain a decrypted Nth authentication information.

The initiator A sends the Nth authentication information Auth(B) and the registration type B and registration number B in the Nth identification information to the administrator to instruct the administrator to decrypt the Nth authentication information Auth(B) and obtain the decrypted Nth authentication information. For details about the process of decrypting the Nth authentication information Auth(B), please refer to S205 and S304, and will not be repeated here.

In step S405, it is determined whether the decrypted Nth authentication information and the Nth identification information received from the interactive end satisfy preset conditions, so as to confirm an identity authentication of the interactive end.

In an embodiment, the Nth identification information comprises a random number and a time stamp generated by the interactive end. The decrypted Nth authentication information comprises a decryption random number and a decryption time stamp. The step for determining whether the decrypted Nth authentication information and the Nth identification information received from the interactive end meet the preset conditions comprise: determining whether the random number and the decryption random number are the same, and obtaining a first determination result. Determine whether the difference between the time stamp and the decryption time stamp is within the configured time, and obtain the second determination result. If both the first determination result and the second determination result meet the preset conditions, the identity authentication of the interactive end is passed. Among them, the preset condition means that the decryption random number is equal to the random number, and the difference between the decryption time stamp and the time stamp is within the configured time. The configuration time refers to whether the authentication process is within the normal request time range, and whether the difference between the time stamp and the decryption time stamp is within the configured time to prevent replay attacks. It should be noted that the configuration time is adjusted according to the actual usage, and the industry generally sets the validity period to 15 minutes.

Specifically, after receiving the decrypted Nth authentication information (including the decryption random number R'(B) and the decryption time stamp D'(B)), the initiator A compares the decryption random number R'(B) with the random number R(B) in the Nth identification information received from the interactive end B, and compares the decryption time stamp D' If the decryption random number R'(B) and the random number R(B) are equal, and the difference between the decryption time stamp D'(B) and the time stamp D(B) is within the configured time, the initiator A determines that the identity authentication of the interchange terminal B is passed.

In addition, if the decryption random number R'(B) and the random number R (B) are not equal, or the difference between the decryption time stamp D'(B) and the time stamp D(B) is not within the configured time, the initiator A determines that the identity authentication of the interactive end B has not been passed, and the link with the interactive end B needs to be disconnected.

In step S406, the first authentication information to the interactive end is sent to control the interactive end to authenticate an identity of the initiator according to the first identification information and the first authentication information.

In one embodiment, if the identity authentication between the clouds is passed (i.e., the initiator A determines that the identity authentication of the interactive end B is passed, and the interactive end B also determines that the identity authentication of the initiator A is passed, etc.), further message verification is required to ensure the normal data exchange between the clouds in the later stage, and the specific steps comprise: if the identity authentication of the initiator and the interactive end are both passed, the initiator session key is generated. The session message is encrypted through the initiator session key to obtain the initiator session authentication message. Send the initiator session authentication message to the interactive end to instruct the interactive end to validate the session validation message. The session key is different from the service key, which is managed by the management end, while the session key is a temporary session key used in communication between clouds, which is only valid once, so it is not managed by the management end, and is generated, used, and destroyed by the cloud of communication. A session message refers to the overall message sent between the initiator and the interchanger, including the registration information, random information, and authentication information in the cloud.

Specifically, the initiator A generates the initiator session key S (AB) based on a specific algorithm based on the parameters in the authentication process (random numbers R(A), R(B) and time stamps D(A), D(B)), for example, the initiator session key (i.e., S(AB) = Hash(R(A)+D(A)+R(B)+D(B)) is obtained through hash operation Then, the initiator A hashes the session message (the overall message sent between the initiator and the interactive end, including the registration information, random information, and authentication information in the cloud, etc.) and uses the initiator's session key S (AB) to perform encryption calculation to obtain the initiator's session authentication message M(AB), and then sends the initiator's session authentication message M (AB) to the interactive end B, so that the interactive end B verifies the initiator's session authentication message M (AB). The process by which Interactive end B validates the initiator session validation message M (AB) is described below and will not be repeated here.

In another embodiment, after instructing the interactive end to authenticate the initiator with the first identification information and the first authentication information, it further comprises: if an authentication pass message sent by the interactive end is received, a session communication with the interactive end is established. At this point, the identity authentication of the initiator to the interactive end is completed.

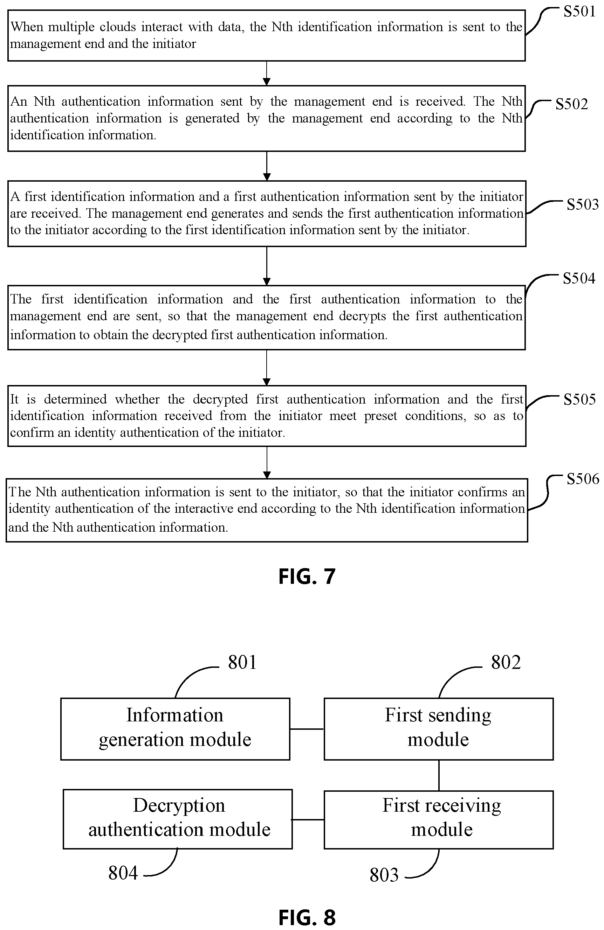

Referring to FIG. 7 illustrating a schematic diagram of the flow of the identity authentication method at the interactive end according to an embodiment of the present disclosure, and the method comprises steps S501-S506.

In step S501, when multiple clouds interact with data, the Nth identification information is sent to the management end and the initiator.

The interactive end B generates random information (including random number R(B) and time stamp D(B)) of the interactive end B, initiates an authentication process to the initiator A, and sends the Nth identification information (including registration information (registration type B and registration number B) and random information (random number R(B) and time stamp D(B)) to the management end and the initiator.

In step S502, an Nth authentication information sent by the management end is received. The Nth authentication information is generated by the management end according to the Nth identification information.

According to the preceding steps, the management end generates the Nth authentication information Auth(B) based on the Nth identification information sent by the interactive end B and delivers it to the interactive end B. The interactive end B receives the Nth authentication information Auth(B) sent by the management end. Please refer to S202 and S301 for details on the process of generating Nth authentication information, and will not be repeated here.

In step S503, a first identification information and a first authentication information sent by the initiator are received. The management end generates and sends the first authentication information to the initiator according to the first identification information sent by the initiator.

The interactive end B receives the first identification information (including registration type A, registration number A, and random number R(A)) and the first authentication information Auth(A) sent by the initiator.

In step S504, the first identification information and the first authentication information to the management end are sent, so that the management end decrypts the first authentication information to obtain the decrypted first authentication information.

The interactive end B sends the first authentication information Auth(A), the registration type A and the registration number A in the first identification information to the management end. The management end decrypts the first authentication information Auth(A) to obtain the decrypted first authentication information. For details about the process of decrypting the first authentication information Auth(A), please refer to S205 and S304.

In step S505, it is determined whether the decrypted first authentication information and the first identification information received from the initiator meet preset conditions, so as to confirm an identity authentication of the initiator.

In an embodiment, the first identification information comprises a random number and a time stamp generated by the initiator. The decrypted first authentication information comprises a decryption random number and a decryption time stamp. The step for determining whether the decrypted first authentication information and the first identification information received from the initiator satisfy the preset conditions comprise: determining whether the random number and the decryption random number are the same to obtain a third determination result; determining whether a difference between the time stamp and the decryption time stamp is within the configured time to obtain the fourth determination result; when both the third and fourth determination results meet the preset conditions, the identity authentication of the initiator is confirmed. The preset condition means that the decryption random number is equal to the random number, and the difference between the decryption time stamp and the time stamp is within the configured time. The configuration time refers to whether the authentication process is within the normal request time range, and whether the difference between the time stamp and the decryption time stamp is within the configured time to prevent replay attacks. It should be noted that the configuration time is adjusted according to the actual usage. Optionally, the industry generally sets the configuration time as 15 minutes.

Specifically, after receiving the decrypted first authentication information (including the decryption random number R'(A) and the decryption time stamp D'(A)), the interactive end B compares the decryption random number R'(A) with the random number R(A) in the first identification information received from the initiator A, and compares a difference between the decryption time stamp D'(A) and the time stamp D(A) with the configured time. When the decryption random number R'(A) and the random number R(A) are equal, and the difference between the decryption time stamp D'(A) and the time stamp D(A) is within the configured time, the interactive end B determines that the identity of the initiator A is confirmed.

In addition, if the decryption random number R'(A) is not equal to the random number R(A), or the difference between the decryption time stamp D'(A) and the time stamp D(A) is not within the configured time, the interactive end B determines that the identity of initiator A has not been authenticated, and the connection with initiator A needs to be disconnected.

In step S506, the Nth authentication information is sent to the initiator, so that the initiator confirms an identity authentication of the interactive end according to the Nth identification information and the Nth authentication information.

In one embodiment, if the identity authentication between the clouds is confirmed, message verification is required. The step of message verification comprises: generating an initiator session key when the identity authentication of both the initiator and the interactive end are confirmed; encrypting a session message through the initiator session key to obtain an initiator session authentication message; determining whether the interactive end session authentication message is the same as the initiator session authentication message; when the interactive end session authentication message is the same as the initiator session authentication message, establishing a session communication with the initiator. The session messages are overall messages sent between the initiator and the interactive end, including registration information, random information, and authentication information in the cloud.

Specifically, the interactive end B generates the interacting session key S'(AB) based on a specific algorithm (e.g., hash operation) combined with the parameters (random numbers R(A), R(B) and time stamps D(A), D(B)) in the authentication process, and then generates the session key S'(AB) for the session message (the overall message sent between the initiator and the interactive, including the registration information in the cloud, random information and authentication information, etc.), and the interactive end session key S'(AB) is used for encryption calculation to obtain the interactive end session authentication message M'(AB). The interactive end B verifies whether the initiator session authentication message M (AB) received from the initiator is the same as the interactive end session authentication message M' (AB). If the initiator session authentication message M (AB) is the same as the interactive session authentication message M'(AB), the interactive end B can establish session communication with the initiator A.

In one embodiment, after the interactive end B establishes a session communication with the initiator A, in order to ensure the privacy of the data and avoid data leakage, the communication data can also be encrypted. The step of encrypting communication data comprises: encrypting and transmitting the communication data in the session communication according to the session key of the interactive end. Specifically, after the session communication between the interactive end B and the initiator A is established, the communication data in the session communication can be encrypted based on the initiator session key S (AB) and the interactive end session key S'(AB) to avoid data leakage.

In another embodiment, after instructing the initiator to authenticate the interactive end with the Nth identification information and the Nth authentication information, it further comprises: if an authentication pass message sent by the initiator is received, a session communication with the initiator is established. In this case, the identity authentication of the interactive end to the initiator is completed.

It should be noted that the key in the present disclosure is a symmetric key, and the encryption operation and decryption operation mentioned in the present disclosure are based on the principle of symmetric key. That is, the same key can be used as the encryption and decryption of information at the same time.

It should be understood that although the steps in the flowchart of FIGs. 2, 4, 6 and 7 are shown in sequence as indicated by the arrows, they are not necessarily executed in the order indicated by the arrows. Unless explicitly stated in this article, there is no strict order in which these steps can be performed, and these steps can be performed in other sequences. Moreover, at least a part of the steps in FIG. 2, FIG. 4, FIG. 6 and FIG. 7 may comprise a plurality of sub-steps or a plurality of stages, and these sub-steps or stages are not necessarily executed at the same time, but can be executed at different times, and the execution sequence of these sub-steps or stages is not necessarily sequential, but can be executed alternately or alternately with at least a part of the sub-steps or stages of other steps or other steps.

Based on the content of the above embodiment, the embodiment of the present disclosure provides an identity authentication device arranged in the management end, for performing the management end identity authentication method provided in the method embodiment. Referring to FIG. 8, the identity authentication device comprises an information generation module 801, a first sending module 802, a first receiving module 803, and a decryption authentication module 804.

The information generation module 801 is used for generating a first authentication information based on a first identification information, and generating an Nth authentication information based on an Nth identification information, when a plurality of clouds carry out data interaction, wherein the first identification information comprises registration information or random information of an initiator, and the Nth identification information comprises registration information or random information of an interactive end.

The first sending module 802 is used for sending the first authentication information to the initiator, and sending the Nth authentication information to the interactive end.

The first receiving module 803 is used for receiving the first identification information and the first authentication information sent by the interactive end, and receiving the Nth identification information and the Nth authentication information sent by the initiator, wherein the first identification information and the first authentication information are sent by the initiator to the interactive end, and the Nth identification information and the Nth authentication information are sent from the interactive end to the initiator.

The decryption authentication module 804 is used for decrypting the Nth authentication information received from the initiator to obtain the decrypted Nth authentication information, and decrypting the first authentication information received from the interactive end to obtain the decrypted first authentication information. The initiator and the interactive end determine whether the identity authentication between the initiator and the interactive end passes according to the decrypted Nth authentication information and the decrypted first authentication information, respectively.

In an embodiment, the first identification information comprises registration information and random information of the initiator. The information generation module 801 comprises a first key acquisition module, a first computing module, and a second computing module.

The first key acquisition module is used for obtaining a root key.

The first computing module is used for calculating a key of the initiator according to the registration information of the initiator and the root key.

The second computing module is used for calculating the first authentication information according to the key of the initiator and the random information.

In an embodiment, the Nth identification information comprises the registration information of the interactive end. The decryption authentication module 804 comprises a second key acquisition module, a third computing module, a fourth computing module:

The second key acquisition module is used for obtaining the root key.

The third computing module is used for calculating a key of the interactive end according to the registration information of the interactive end and the root key.

The fourth computing module is used for decrypting the Nth authentication information received from the initiator through the key of the interactive end to obtain the decrypted Nth authentication information.

In one embodiment, the identity authentication device further comprises a first registration module.

The first registration module is used for receiving and recording a registered cloud identification information sent by a registration system.

The identity authentication device according to the embodiment of the present disclosure can be used to implement the technical scheme of the embodiment of end identity authentication method performed in the management end. Its implementation principle and technical effect are similar, and will not be repeated here.

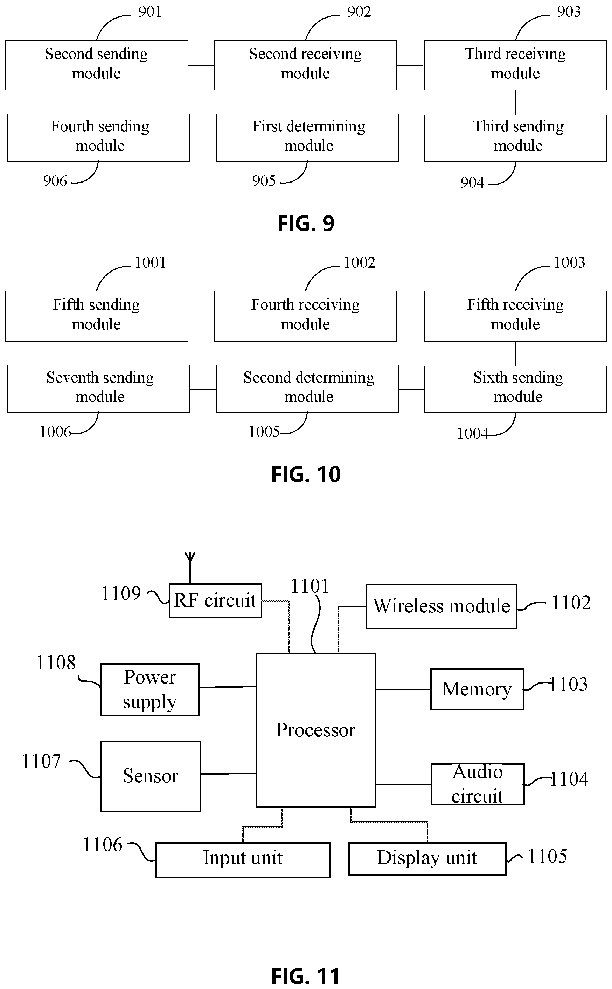

The embodiment of the present disclosure also provides an identity authentication device arranged in the initiator for performing the initiator identity authentication method provided in the method embodiment. Referring to FIG. 9, the identity authentication device comprises a second sending module 901, a second receiving module 902, a third receiving module 903, a third sending module 904, a first determining module 905, and a fourth sending module 906.

The second sending module 901 is used for sending a first identification information to a management end and an interactive end when a plurality of clouds carry out data interaction.

The second receiving module 902 is used for receiving a first authentication information sent by the management end. The first authentication information is generated by the management end according to the first identification information.

The third receiving module 903 is used for receiving an Nth identification information and an Nth authentication information sent by the interactive end. The management end generates and sends the Nth authentication information to the interactive end according to the Nth identification information received by the interactive end.

The third sending module 904 is used for sending the Nth identification information and the Nth authentication information to the management end, so that the management end decrypts the Nth authentication information to obtain a decrypted Nth authentication information.

The first determining module 905 is used for determining whether the decrypted Nth authentication information and the Nth identification information received from the interactive end satisfy preset conditions, so as to confirm an identity authentication of the interactive end.

The fourth sending module 906 is used for sending the first authentication information to the interactive end to control the interactive end to authenticate an identity of the initiator according to the first identification information and the first authentication information.

In an embodiment, the Nth identification information comprises a random number and a time stamp generated by the interactive end, the decrypted Nth authentication information comprises a decryption random number and a decryption time stamp. The first determining module 905 comprises a first result determination module, a second result determination module:

The first result determination module is used for determining whether the random number and the decryption random number are the same to obtain a first determination result.

The second result determination module is used for determining whether a difference between the time stamp and the decryption time stamp is within the configured time to obtain a second determination result.

The first identity determining module is used for confirming the identity authentication of the interactive end when both the first determination result and the second determination result satisfy the preset conditions.

In one embodiment, the identity authentication device further comprises a first session key generation module, a first encryption module, and a first message verification module.

The first session key generation module is used for generating an initiator session key when the identity authentication of both the initiator and the interactive end are confirmed.

The first encryption module is used for encrypting a session message through the initiator session key to obtain an initiator session authentication message.

The first message verification module is used for sending the initiator session authentication message to the interactive end to verify the session authentication message.

In one embodiment, the identity authentication device further comprises a first communication establishment module.

The first communication establishment module is used for establishing a session communication with the interactive end in response to a reception of an authentication pass message sent by the interactive end.

The identity authentication device according to the embodiment of the present disclosure can be used to implement the technical scheme of the embodiment of end identity authentication method performed in the initiator. Its implementation principle and technical effect are similar, and will not be repeated herein.

The embodiment of the present disclosure also provides an identity authentication device arranged in the interactive end for performing the identity authentication method provided in the above method embodiment. Referring to FIG. 10, the identity authentication device comprises a fifth sending module 1001, a fourth receiving module 1002, a fifth receiving module 1003, a sixth sending module 1004, a second determining module 1005, and a seventh sending module 1006.

The fifth sending module 1001 is used for sending an Nth identification information to a management end and an initiator when a plurality of clouds interact data.

The fourth receiving module 1002 is used for receiving an Nth authentication information sent by the management end, wherein the Nth authentication information is generated by the management end according to the Nth identification information.

The fifth receiving module 1003 is used for receiving a first identification information and a first authentication information sent by the initiator, wherein the management end generates and sends the first authentication information to the initiator according to the first identification information sent by the initiator.

The sixth sending module 1004 is used for sending the first identification information and the first authentication information to the management end, so that the management end decrypts the first authentication information to obtain the decrypted first authentication information.

The second determining module 1005 is used for determining whether the decrypted first authentication information and the first identification information received from the initiator meet preset conditions, so as to confirm an identity authentication of the initiator.

The seventh sending module 1006 is used for sending the Nth authentication information to the initiator, so that the initiator confirms an identity authentication of the interactive end according to the Nth identification information and the Nth authentication information.

In an embodiment, the first identification information comprises a random number and a time stamp generated by the initiator. The decrypted first authentication information comprises a decryption random number and a decryption time stamp. The second determining module 1005 comprises a third result determination module, a fourth result determination module, and a second identity determination module.

The third result determination module is used for determining whether the random number and the decryption random number are the same to obtain a third determination result.

The fourth result determination module is used for determining whether the difference between the time stamp and the decryption time stamp is within the configured time to obtain a fourth determination result.

The second identity determination module is used for confirming the identity authentication of the initiator when the third determination result and the fourth determination result both satisfy the preset conditions.

In one embodiment, the identity authentication device further comprises a second session key generation module, a second encryption module, a second message verification module, and an encryption communication establishment module.

The second session key generation module is used for a session key of the interactive end when the identity authentication of the interactive end and the identity authentication of the initiator are confirmed.

The second encryption module is used for encrypting a session message through the session key of the interactive end to obtain a session authentication message of the interactive end.

The second message verification module determines whether the session authentication message of the interactive end is the same as a session authentication message received by the initiator.

The encryption communication establishment module is used for establishing a session communication with the initiator when the session authentication message of the interactive end is the same as the session authentication message received by the initiator.

In one embodiment, the identity authentication device further comprises an encryption transmission module.

The encryption transmission module is used for encrypting the transmission of communication data in the session communication according to the session key of the interactive end.

In one embodiment, the identity authentication device further comprises a second communication establishment module.

The second communication establishment module is used for establishing session communication with the initiator if an authentication pass message sent by the initiator is received.

The identity authentication device of the embodiment of the present disclosure can be used to implement the technical scheme of the embodiment of the identity authentication method of the interactive end, and its implementation principle and technical effect are similar, and will not be repeated herein.

Correspondingly, the embodiment of the present disclosure also provides an electronic device, as shown in FIG. 11. The electronic device may include a processor 1101 with one or more processing cores, a wireless (WiFi) module 1102, a memory 1103 with one or more computer-readable storage media, an audio circuit 1104, a display unit 1105, and an input unit 1106, sensor 1107, power supply 1108, and radio frequency (RF) circuit 1109 and other components. Those skilled in the art can understand that the structure of the electronic device shown in FIG. 11 does not constitute a limitation of the electronic device, and may include more or fewer parts than illustrated, or the combination of certain parts, or the arrangement of different parts. Where:

The processor 1101 is a control center of the electronic device, which utilizes various interfaces and lines to connect various parts of the entire electronic device, and performs various functions and processes data of the electronic device by running or executing software programs and/or modules stored in the memory 1103, and calling the data stored in the memory 1103, so as to carry out overall monitoring of the electronic device. In one embodiment, the processor 1101 may comprise one or more processing cores. Preferably, the processor 1101 can integrate an application processor and a modem processor. The application processor mainly processes the operating system, the user interface and the like, and the modem processor mainly processes wireless communication. Understandably, the modem processor is independent from the processor 1101.

WiFi belongs to short-range wireless transmission technology, and the electronic device can help a user send and receive e-mails, browse web pages and access streaming media through wireless module 1102, etc. It provides users with wireless broadband Internet access. Although the wireless module 1102 is shown in FIG. 11, it is understandable that it is not a necessary component of the electronic device and can be omitted as necessary without changing the essence of the present disclosure.

The memory 1103 can be used to store software programs and modules. The processor 1101 performs various functional applications and data processing by running computer-readable instructions and modules stored in memory 1103. The memory 1103 may mainly comprise a storage program area and a storage data area. The storage program area can store the operating system, and at least one function application (such as sound playback function, image playback function, etc.). The storage data area can store data created according to the use of the electronic device (such as audio data, phone books, etc.). In addition, the memory 1103 may include high-speed random-access memory as well as non-volatile memory, such as at least one disk storage device, flash memory device, or other volatile solid-state memory device. Correspondingly, the memory 1103 may also include a memory controller to provide access to the memory 1103 by the processor 1101 and the input unit 1106.

The audio circuit 1104 includes a loudspeaker, which provides an audio interface between the user and the electronic device. The audio circuit 1104 can transmit the electrical signal after receiving the audio data converted to the loudspeaker, and the speaker is converted into the sound signal output. On the other hand, the loudspeaker converts the collected sound signal into an electrical signal, is converted into audio data after being received by the audio circuit 1104. The audio data is processed by the processor 1101, and is sent to another electronic device through the radio frequency circuit 1109, or the audio data is output to the memory 1103 for further processing.

The display unit 1105 can be used to display information entered by the user or information provided to the user and various graphical user interfaces of the electronic device. Tthese graphical user interfaces can be made up of graphics, text, icons, videos and any combination thereof.

The input unit 1106 can be used to receive input numeric or character information and to generate keyboard, mouse, joystick, optical, or trackball signal inputs related to user settings and function control.

The electronic device may also include at least one sensor1107, such as a light sensor, a motion sensor, and other sensors. Other sensors such as gyroscopes, barometers, hygrometers, thermometers, and infrared sensors that can also be configured with electronic devices will not be repeated here.

The electronic device also comprises a power supply 1108 (such as a battery) that supplies power to each component. Preferably, the power supply can be connected with the processor 1101 through the power management system, so that the functions such as managing charging, discharging, and power consumption management can be realized through the power management system. The power supply 1108 can also include any component such as one or more DC or AC power sources, recharging systems, power fault detection circuits, power converters or inverters, and power status indicators.

The radio frequency circuit 1109 can be used for sending and receiving information or the receiving and sending of signals in the process of calling, in particular, after receiving the downlink information of the base station, it is handed over to one or more processors 1101 for processing. In addition, the data involved in the upstream is sent to the base station. In general, RF circuit 1109 includes, but is not limited to, an antenna, at least one amplifier, a tuner, one or more oscillators, a Subscriber Identity Module (SIM) card, a transceiver, a coupler, a Low Noise Amplifier (LNA), a duplexer, etc. In addition, the RF circuit 1109 can also communicate with networks and other devices via wireless communication. Wireless communication can use any communication standard or protocol, including but not limited to Global System of Mobile Communication (GSM), General Packet Radio Service (GPRS), Code Division Multiple Access (CDMA), Wideband Code Division Multiple Access (WCDMA, Wideband Code Division Multiple Access), Long Term Evolution (LTE), E-mail, Short Messaging Service (SMS), etc.

Although not shown, electronic devices can also include cameras, Bluetooth modules, etc., which will not be repeated here. Specifically, in this embodiment, the processor 1101 in the electronic device will load the executable file corresponding to the process of one or more applications into the memory 1103 according to the following instructions, and the processor 1101 will run the present disclosure stored in the memory 1103, thereby realizing the function of the identity authentication method.

A person skilled in the art may understand that all or part of the steps in the various methods of the above embodiments may be completed by instructions or by instruction control related hardware, and the instructions may be stored in a computer-readable storage medium and loaded and executed by a processor.

To this end, the embodiment of the present disclosure provides a computer-readable storage medium in which a plurality of instructions are stored, and the instructions can be loaded by a processor to realize the function of the identity authentication method.

The computer readable storage medium may include: Read Only Memory (ROM), Random Access Memory (RAM), disk or optical disc, etc.

The above is a detailed introduction to the identity authentication method, apparatus, electronic device and computer-readable storage medium provided by the embodiment of the present disclosure, and the principle and embodiment of the present disclosure are described in this article by applying specific examples, and the description of the above embodiment is only used to help understand the method and the core idea of the present disclosure. At the same time, for those skilled in the art, there will be changes in the specific embodiment and scope of application according to the idea of the present disclosure, and in summary, the contents of this specification should not be construed as a restriction on the present disclosure.

## Claims

1. An identity authentication method, comprising:
generating a first authentication information based on a first identification information, and generating an Nth authentication information based on an Nth identification information, when a plurality of clouds carry out data interaction, wherein the first identification information comprises registration information or random information of an initiator, and the Nth identification information comprises registration information or random information of an interactive end;
sending the first authentication information to the initiator, and sending the Nth authentication information to the interactive end;
receiving the first identification information and the first authentication information sent by the interactive end, and receiving the Nth identification information and the Nth authentication information sent by the initiator, wherein the first identification information and the first authentication information are sent by the initiator to the interactive end, and the Nth identification information and the Nth authentication information are sent from the interactive end to the initiator; and
decrypting the Nth authentication information received from the initiator to obtain the decrypted Nth authentication information, and decrypting the first authentication information received from the interactive end to obtain the decrypted first authentication information, so that the initiator and the interactive end determine whether the identity authentication between the initiator and the interactive end passes according to the decrypted Nth authentication information and the decrypted first authentication information, respectively.

2. The identity authentication method of claim 1, wherein the first identification information comprises registration information and random information of the initiator, and the generating a first authentication information based on a first identification information comprises:
obtaining a root key;
calculating a key of the initiator according to the registration information of the initiator and the root key; and
calculating the first authentication information according to the key of the initiator and the random information.

3. The identity authentication method of claim 1 or 2, wherein the Nth identification information comprises the registration information of the interactive end, and the decrypting the Nth authentication information received from the initiator to obtain the decrypted Nth authentication information, comprising:
obtaining a root key;
calculating a key of the interactive end according to the registration information of the interactive end and the root key; and
decrypting the Nth authentication information received from the initiator through the key of the interactive end to obtain the decrypted Nth authentication information.

4. The identity authentication method of claim 3, wherein the decrypted Nth authentication information comprises a decryption random number and a decryption time stamp.

5. The identity authentication method of claim 1, wherein the registration information comprises a registration number or a registration type of the cloud, and the random information comprises a random number and a time stamp generated when the cloud carries out data interaction.

6. The identity authentication method of any one of claims 1-5, before the generating a first authentication information based on a first identification information, and the generating an Nth authentication information based on an Nth identification information, wherein the identity authentication method further comprises:
receiving and recording a registered cloud identification information sent by a registration system.

7. An identity authentication method, comprising:
sending a first identification information to a management end and an interactive end when a plurality of clouds carry out data interaction;
receiving a first authentication information sent by the management end, wherein the first authentication information is generated by the management end according to the first identification information;
receiving an Nth identification information and an Nth authentication information sent by the interactive end, wherein the management end generates and sends the Nth authentication information to the interactive end according to the Nth identification information received by the interactive end;
sending the Nth identification information and the Nth authentication information to the management end, so that the management end decrypts the Nth authentication information to obtain a decrypted Nth authentication information;
determining whether the decrypted Nth authentication information and the Nth identification information received from the interactive end satisfy preset conditions, so as to confirm an identity authentication of the interactive end; and
sending the first authentication information to the interactive end to control the interactive end to authenticate an identity of the initiator according to the first identification information and the first authentication information.

8. The identity authentication method of claim 7, wherein the Nth identification information comprises a random number and a time stamp generated by the interactive end, the decrypted Nth authentication information comprises a decryption random number and a decryption time stamp, and the determining whether the decrypted Nth authentication information and the Nth identification information received from the interactive end satisfy a preset condition, comprising:
determining whether the random number and the decryption random number are the same to obtain a first determination result;
determining whether a difference between the time stamp and the decryption time stamp is within the configured time to obtain a second determination result; and
confirming the identity authentication of the interactive end when both the first determination result and the second determination result satisfy the preset conditions.

9. The identity authentication method of claim 7 or 8, further comprising:
generating an initiator session key when the identity authentication of both the initiator and the interactive end are confirmed;
encrypting a session message through the initiator session key to obtain an initiator session authentication message; and
sending the initiator session authentication message to the interactive end to verify the session authentication message.

10. The identity authentication method of claim 7 or 8, wherein after the sending the first authentication information to the interactive end to control the interactive end to authenticate an identity of the initiator according to the first identification information and the first authentication information, the method further comprises:
establishing a session communication with the interactive end in response to a reception of an authentication pass message sent by the interactive end.

11. An identity authentication method, comprising:
sending an Nth identification information to a management end and an initiator when a plurality of clouds interact data;
receiving an Nth authentication information sent by the management end, wherein the Nth authentication information is generated by the management end according to the Nth identification information;
receiving a first identification information and a first authentication information sent by the initiator, wherein the management end generates and sends the first authentication information to the initiator according to the first identification information sent by the initiator;
sending the first identification information and the first authentication information to the management end, so that the management end decrypts the first authentication information to obtain the decrypted first authentication information;
determining whether the decrypted first authentication information and the first identification information received from the initiator meet preset conditions, so as to confirm an identity authentication of the initiator; and
sending the Nth authentication information to the initiator, so that the initiator confirms an identity authentication of the interactive end according to the Nth identification information and the Nth authentication information.

12. The identity authentication method of claim 11, further comprising:
generating a session key of the interactive end when the identity authentication of the interactive end and the identity authentication of the initiator are confirmed;
encrypting a session message through the session key of the interactive end to obtain a session authentication message of the interactive end;
determining whether the session authentication message of the interactive end is the same as a session authentication message received by the initiator; and
establishing a session communication with the initiator when the session authentication message of the interactive end is the same as the session authentication message received by the initiator.

13. The identity authentication method of claim 12, wherein after establishing a session communication with the initiator, the identity authentication method further comprises:
encrypting communication data in the session communication and transmitted according to the session key of the interactive end.

14. An identity authentication method, comprising:
an initiator sending a first identification information to the management end, and an interactive end sending an Nth identification information to the management end, when a plurality of clouds carry out data interaction, wherein the first identification information comprises a registration information or random information of the initiator, and the Nth identification information comprises a registration information or random information of the interactive end;
the management end generating and sending a first authentication information to the initiator according to the first identification information, and generating and sending an Nth authentication information to the interactive end according to the received Nth identification information;
the initiator sending the first identification information and the first authentication information received from the management end to the interactive end, and the interactive end sending the Nth identification information and the Nth authentication information received from the management end to the initiator;
the interactive end sending the first identification information and the first authentication information received from the initiator to the management end, and the initiator sending the Nth identification information and the Nth authentication information received from the interactive end to the management end;
the management end decrypting the first authentication information received from the interactive end and the Nth authentication information received from the initiator to obtain the decrypted first authentication information and the decrypted Nth authentication information, and sending the decrypted first authentication information to the interactive end, and sending the decrypted Nth authentication information to the initiator; and
the interactive end determining whether the decrypted first authentication information and the first identification information received from the initiator meet preset conditions, so as to determine whether the identity authentication of the initiator is confirmed; the initiator determining whether the decrypted Nth authentication information and the Nth identification information received from the interactive end meet the preset conditions, so as to determine whether the identity authentication of the interactive end is confirmed.

15. An identity authentication device, comprising:
an information generation module, for generating a first authentication information based on a first identification information, and generating an Nth authentication information based on an Nth identification information, when a plurality of clouds carry out data interaction, wherein the first identification information comprises registration information or random information of an initiator, and the Nth identification information comprises registration information or random information of an interactive end;
a first sending module, for sending the first authentication information to the initiator, and sending the Nth authentication information to the interactive end;
a first receiving module, for receiving the first identification information and the first authentication information sent by the interactive end, and receiving the Nth identification information and the Nth authentication information sent by the initiator, wherein the first identification information and the first authentication information are sent by the initiator to the interactive end, and the Nth identification information and the Nth authentication information are sent from the interactive end to the initiator; and
a decryption authentication module, for decrypting the Nth authentication information received from the initiator to obtain the decrypted Nth authentication information, and decrypting the first authentication information received from the interactive end to obtain the decrypted first authentication information, so that the initiator and the interactive end determine whether the identity authentication between the initiator and the interactive end passes according to the decrypted Nth authentication information and the decrypted first authentication information, respectively.

16. An identity authentication device, comprising:
a second sending module, for sending a first identification information to a management end and an interactive end when a plurality of clouds carry out data interaction;
a second receiving module, for receiving a first authentication information sent by the management end, wherein the first authentication information is generated by the management end according to the first identification information;
a third receiving module, for receiving an Nth identification information and an Nth authentication information sent by the interactive end, wherein the management end generates and sends the Nth authentication information to the interactive end according to the Nth identification information received by the interactive end;
a third sending module, for sending the Nth identification information and the Nth authentication information to the management end, so that the management end decrypts the Nth authentication information to obtain a decrypted Nth authentication information;
a first determining module, for determining whether the decrypted Nth authentication information and the Nth identification information received from the interactive end satisfy preset conditions, so as to confirm an identity authentication of the interactive end; and
a fourth sending module, for sending the first authentication information to the interactive end to control the interactive end to authenticate an identity of the initiator according to the first identification information and the first authentication information.

17. An identity authentication device, comprising:
a fifth sending module, for sending an Nth identification information to a management end and an initiator when a plurality of clouds interact data;
a fourth receiving module, for receiving an Nth authentication information sent by the management end, wherein the Nth authentication information is generated by the management end according to the Nth identification information;
a fifth receiving module, for receiving a first identification information and a first authentication information sent by the initiator, wherein the management end generates and sends the first authentication information to the initiator according to the first identification information sent by the initiator;
a sixth sending module, for sending the first identification information and the first authentication information to the management end, so that the management end decrypts the first authentication information to obtain the decrypted first authentication information;
a second determining module, for determining whether the decrypted first authentication information and the first identification information received from the initiator meet preset conditions, so as to confirm an identity authentication of the initiator; and
a seventh sending module, for sending the Nth authentication information to the initiator, so that the initiator confirms an identity authentication of the interactive end according to the Nth identification information and the Nth authentication information.

18. An electronic device, comprising a processor and a memory storing computer-readable instructions executable by the processor to perform the identity authentication method as claimed in any one of claims 1 to 14.

19. A computer-readable storage medium, storing a plurality of instructions executable by a processor to perform the identity authentication method as claimed in any one of claims 1-14.
